# EUROPEAN PATENT APPLICATION

(11) **EP 1 439 501 A1**
(43) Date of publication of application: **21.07.2004**
(21) Application number: 03100054.0
(22) Date of filing: 14.01.2003
(51) Int. Cl.: G07F 7/02, G07F 19/00

(54) **Method for temporal payment of the credit charge**

(71) Applicant: Hashimoto, Katsumi, Tokyo (JP)
(72) Inventor: Hashimoto, Katsumi, Tokyo (JP)
(74) Representative: Hooiveld, Arjen Jan Winfried

(57) **Abstract**

A method of paying a credit-based charge in advance is provided by which payment to a member store is possible in nearly a couple of days. In a case that merchandise purchase acceptance/rejection information sent by a credit company terminal unit in response to a sending request for merchandise purchase acceptance/rejection information of whether or not merchandise purchase is possible on credit by a customer having a customer ID "C001" shows that the customer can purchase merchandise by utilizing credit, a central server updates deposit information about an account of a member store having a member store ID "S001" by taking into consideration an amount shown by credit-based charge information sent from a member store terminal unit, in a short term, e.g. within a couple of days. Payment to a member store can be made in nearly a couple of days.

## Description

### BACKGROUND OF THE INVENTION

### 1. Technical Field of the Invention

The present invention relates to a method of paying a credit-based charge in advance upon performing a commercial transaction on credit.

### 2. Description of the Related Art

When purchasing merchandise by using a credit card, the store ID of a store keeping the merchandise for sale, the information of credit-based charge and the like are sent, together with a customer ID recorded on a customer's card, to a credit company terminal unit. This makes it possible to inquire whether the customer having such a customer ID can purchase the merchandise or not. In the case the result of inquiry shows that the customer can purchase the merchandise, he or she is allowed to make a signature thereby materializing a contract of merchandise transaction.

The charge, usually, is paid after elapsing a time period of 30 to 60 days to the store (member store) by a credit card company or entity, through an account transfer in an amount deducted by a commission for the card company.

However, traditionally, payment to a member store usually requires a time as long as nearly 30 to 60 days. There has been a desire for the advent of a proposed scheme for a novel cash flow capable of realizing the above in a short time of period.

Accordingly, the present invention has been made in order to solve such a problem as encountered in the conventional. It is an object of the invention to provide a method of paying a credit-based charge in advance by which payment to a member store is possible within nearly a couple of days.

### SUMMARY OF THE INVENTION

In order to achieve the object, the invention is a method of paying a credit-based charge in advance comprising:
a step that a member store terminal unit reads a recording medium recording a customer identifier and sends information of credit-based charge to a customer thereof and information including a member store identification together with a read-out customer identifier;
a step that a settlement information center terminal unit requests a credit company terminal unit to send merchandise purchase acceptance/rejection information representative of whether or not the customer having the customer identifier is allowed to purchase merchandise by utilizing credit, in response to a reception of the pieces of information; and
a step that a central server updates deposit information about an account of the member store having the member store identifier in a short time period by taking into consideration an amount shown by the credit-based charge information in the case that the merchandise purchase acceptance/rejection information sent in response to the request by the credit company terminal unit shows that the customer is allowed to purchase merchandise by utilizing credit.

In the invention, the central server updates deposit information of an account of a member store having the member store identifier by taking into consideration an amount represented by the credit-based charge information in a short time period, e.g. within a couple of days in the case the merchandise purchase acceptance/rejection information sent by the credit company terminal unit in response to the request shows that the customer is allowed to purchase merchandise by utilizing credit. Thus, payment to a member store can be carried out in nearly a couple of days.

The settlement information center terminal unit may cumulatively store an information group associated with an addition of a unique case identifier and reception date-and-hour information of the information to an association of the customer identifier, the credit-based charge information and the member store identifier.

Also, the member store identification and account information representative of an account thereof are previously registered, with a correspondence, to registering means, the settlement information center terminal unit sending, to the central server, account information corresponding to the member store identifier determined by making reference to a registration content of the registering means together with the information group cumulatively stored, in response to a case information sending request from the central server.

Furthermore, the central server may update the deposit information about an account of the member store having the member store identifier designated by the account information in a predetermined time from a time designated by the reception date-and-hour information in the received information group by taking into consideration an amount shown by the credit-based charge information.

An update process of deposit information by the central server can be to update the deposit information such that a deposit amount increases by an amount deducing first and second commissions from the amount represented by the credit-based charge information. The first commission can be registered based on each member store identifier to second registering means.

Also, according to the invention, there is provided a method of paying a credit-based charge in advance characterized in that: in a case that merchandise purchase acceptance/rejection information sent by a credit company terminal unit in response to a sending request for merchandise purchase acceptance/rejection information of whether or not merchandise purchase is possible on credit by a customer shows that the customer can purchase merchandise by utilizing credit, a central server carries out an update process to update deposit information about an account of a member store by taking into consideration an amount shown by credit-based charge information sent from a member store terminal unit;
the update process being carried out within a couple of days from a time of sending request for the merchandise purchase acceptance/rejection information by taking into consideration two kinds of commissions.

Incidentally, the above operations can be executed due to execution of a program recorded on a recording medium by a computer. Such recording mediums include a ROM, a semiconductor recording medium such as a semiconductor IC, a optical recording medium such as a DVDROM or CDROM, a magnetic recording medium such as a flexible disk, and a recording medium such as a magnetooptical recording medium such as an MO capable of recording and reading out a digital content. Meanwhile, such a program can be recorded onto a recording medium by download from a predetermined information processing apparatus through a communication network.

### BRIEF DESCRIPTION OF THE DRAWINGS

Fig. 1 is an overall configuration diagram of a system 1 according to an embodiment of the present invention;
Fig. 2 is a configuration diagram of a member store terminal unit 100;
Fig. 3 is a configuration diagram of a settlement information center terminal unit 200;
Fig. 4 is an explanatory figure of a table 251;
Fig. 5 is an explanatory figure of a table 252;
Fig. 6 is a configuration diagram of a credit company terminal unit 400;
Fig. 7 is an explanatory figure of a table 451;
Fig. 8 is a configuration diagram of a central server 300;
Fig. 9 is a configuration diagram of a deposit management apparatus 500;
Fig. 10 is an explanatory figure of a table 551;
Fig. 11 is an explanatory diagram of an operation example;
Fig. 12 is an explanatory diagram of an operation example;
Fig. 13 is an explanatory figure of a table 351; and
Fig. 14 is an explanatory diagram of a hardware configuration of the apparatuses.

### DESCRIPTION OF THE PREFERRED EMBODIMENT

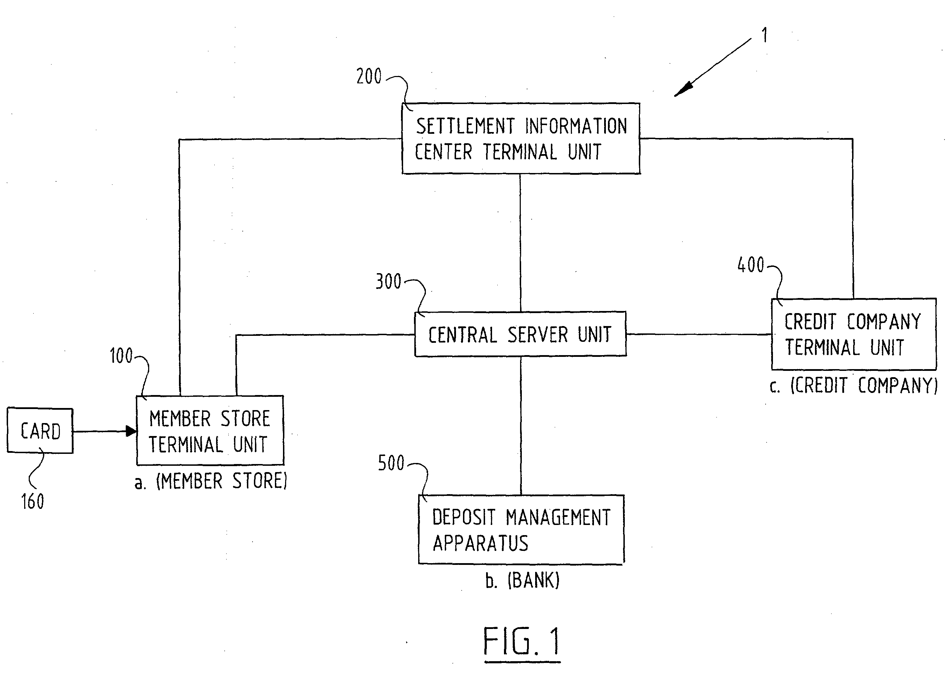

An embodiment of the present invention will now be explained with reference to the drawings. Fig. 1 is an overall configuration diagram of a commercial transaction system 1 according to an embodiment of the invention. This system 1 includes a member store terminal unit 100 set up in a member store to credit card, a credit company terminal unit 400 set up in a credit company, a deposit management apparatus 500 installed at a bank, a settlement information center terminal unit 200 and a central server 300 that are provided at suitable locations on the network. Note that, although the member store terminal unit 100 and the like are naturally arranged in plurality, the embodiment shows only one unit for the sake of easier understanding. Meanwhile, connections are provided for communicating the required pieces of information between the units through the Internet or private lines.

### (Member Store Terminal Unit 100)

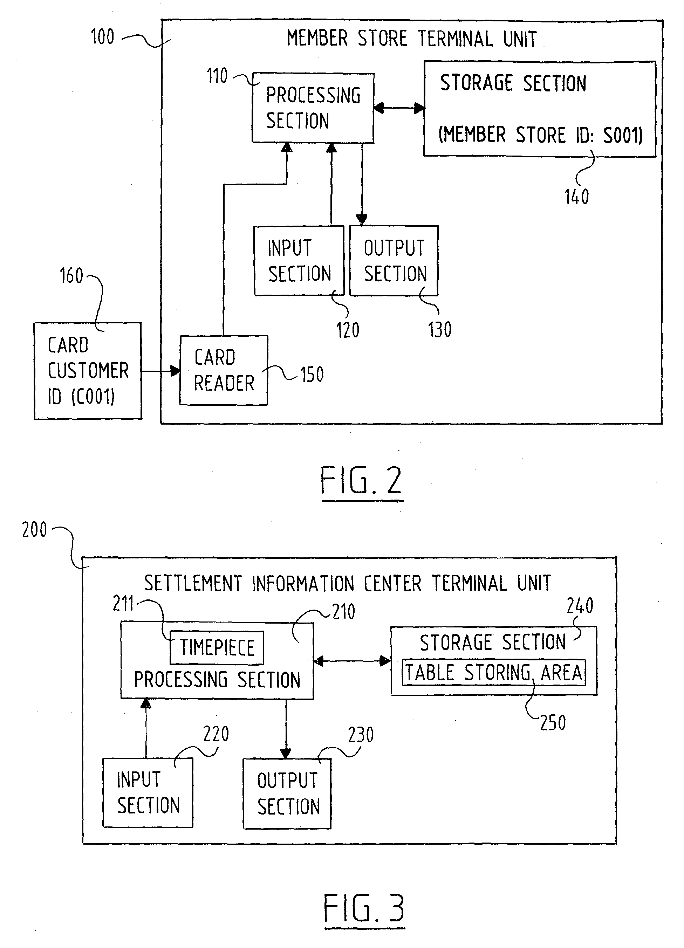

Explanation is now made on the configuration and operation of the units or apparatuses shown in Fig. 1. At first, the configuration and operation is explained of the member store terminal unit 100. As shown in Fig. 2, the member store terminal unit 100 is provided with a processing section 110 realized with a CPU or the like for operation according to an operation program, an input section 120 realized with an input device such as a keyboard, an output section 130 realized with a display device such as a CRT, a storage section 140 realized with an HD or the like, and a card reader 150. The storage section 140 is stored with an operation program and a member store ID "S001", i.e. member store identifier. The information stored on the storage area is to be referred, updated or so by the processing section 110.

In case a card 160 recording a customer ID "C001", a customer identifier, is loaded to the card reader 150, the card reader 150 reads out the customer ID "C001" and delivers it to the processing section 110. When merchandise purchase amount of a customer is inputted and instructed for transmission by operating the input section 120, the processing section 110 transmits the credit-based charge information representative of merchandise purchase amount and the member store ID "S001" stored in the storage section 140, together with the customer ID "C001", to the settlement information center terminal unit 200. Note that the card may be any of an IC card or another type of card.

### (Settlement Information Center Terminal Unit 200)

Fig. 3 is a configuration diagram of the settlement information center terminal unit 200. As shown in Fig. 3, the settlement information center terminal unit 200 has a processing section 210 realized with a CPU or the like for operation according to an operation program, an input section 220 realized with an input device such as a keyboard, an output section 230 realized with a display device such as a CRT, and a storage section 240 realized with an HD or the like. The storage section 240 is stored with an operation program and formed with a table storage area 250 to store thereon tables. The tables stored on the table storage area 250 are to be referred, updated or so by the processing section 210. Also, the processing section 210 has a timepiece 211 with calendar function to grasp time information, making it possible to detect date-and-time information about receiving the information sent from the member store terminal unit 100.

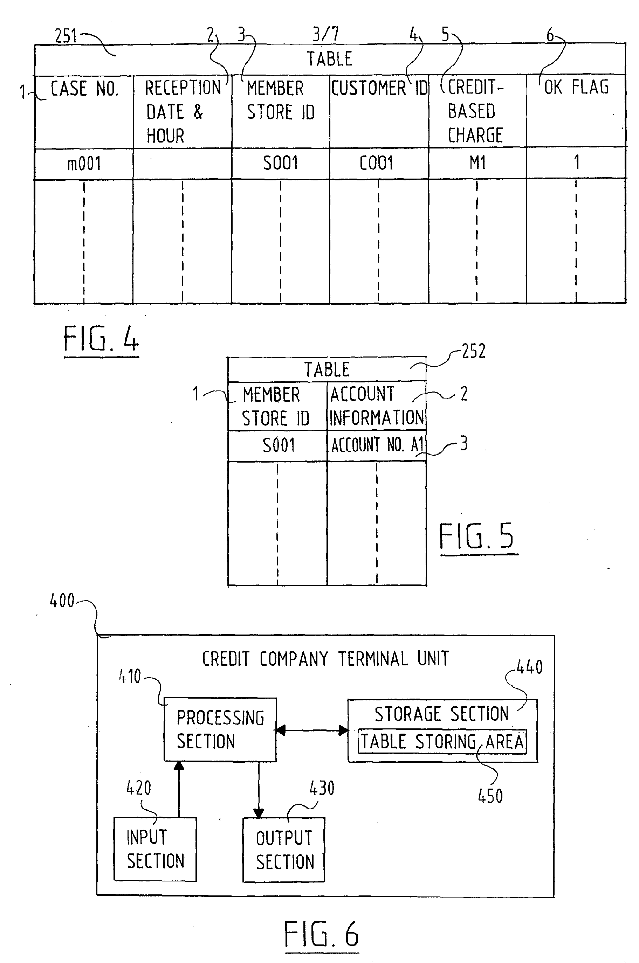

Fig. 4 is an explanatory figure of a table 251 stored in the table storage area 250. The table 251 can store, with association, a case number uniquely provided to each case, a reception date-and-hour that is a date and hour when information is received from the member store terminal unit 100, and a member store ID, customer ID, credit-based charge and OK flag sent therewith. The processing section 210 stores, with association, the received member store ID, customer ID and credit-based charge added with a unique case number and reception date-and-hour information, to the table 251. The example of Fig. 4 shows an example that the information of a member store ID "S001", customer ID "C001" and credit-based charge "M1 has been received at "O (month), x (day), a (hour): b (minute)" which information is added by a case number "m001".

Meanwhile, the OK flag is a flag to be set to "1" when receiving the information the customer is to purchase merchandise by the way as herein explained and to "0" in the other case than that. Consequently, advance payment against a credit-based charge, as shown below, is to be effected only on a case with the OK flag of "1".

Fig. 5 is an explanatory figure of another table 252 stored in the table storage area 250. The table 252 is registered having, with association, a member store ID and account information representative of an account number of the bank account thereof. In the example of Fig. 5, registration is with an account number A1 for the member store ID "S001". Incidentally, the deposit management apparatus 500 in Fig. 1 is usually set up in plurality in each of a plurality of banks, this embodiment assumably explains one deposit management apparatus 500 set up in a certain bank, for easier understanding of the operation.

### (Credit Company Terminal Unit 400)

Fig. 6 is a configuration diagram of the credit company terminal unit 400. As shown in Fig. 6, the credit company terminal unit 400 is provided with a processing section 410 realized with a CPU or the like for operation according to an operation program, an input section 420 realized with an input device such as a keyboard, an output section 430 realized with a display device such as a CRT, and a storage section 440 realized with an HD or the like. The storage section 440 is stored with an operation program and formed with a table storage area 450 to store tables. The table stored in the table storage area 450 is to be referred, updated or so by the processing section 410.

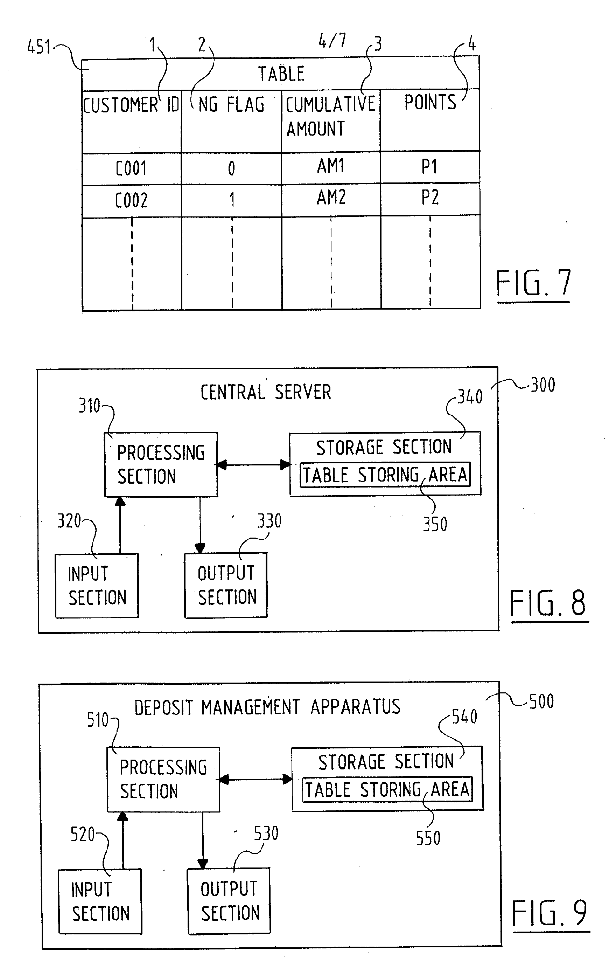

Fig. 7 is an explanatory figure of the table 451 stored in the table storage area 450. The table 451 can store, with association, a customer ID, an NG flag, a cumulative amount and points. In the case that the customer is eligible to buy merchandise on credit, the NG flag is set at "0". On the contrary, where he/she cannot purchase it, the NG flag is set at "1". Consequently, in the example of Fig. 7, the customer having a customer ID "C001" can purchase merchandise because of the NG flag "0". However, the customer having a customer ID "C002" cannot purchase merchandise. The processing section 410 is allowed to transmit such NG flag information upon a request from other unit or apparatus.

Meanwhile, the processing section 210, when receiving credit-based charge information, increasingly updates the cumulative amount corresponding to the customer ID by an amount represented by the credit-based charge information and updates the points in proportion to the updated cumulative amount. Points update may be on a proper rule, e.g. setting previously points per yen to be multiplied by a cumulative amount or so.

### (Central Server 300)

Fig. 8 is a configuration diagram of the central server 300. As shown in Fig. 8, the central server 300 is provided with a processing section 310 realized with a CPU or the like for operation according to an operation program, an input section 320 realized with an input device such as a keyboard, an output section 330 realized with a display device such as a CRT, and a storage section 340 realized with an HD or the like. The storage section 340 is stored with an operation program and formed with a table storage area 350 to store tables. The table stored in the table storage area 350 is to be referred, updated or so by the processing section 310.

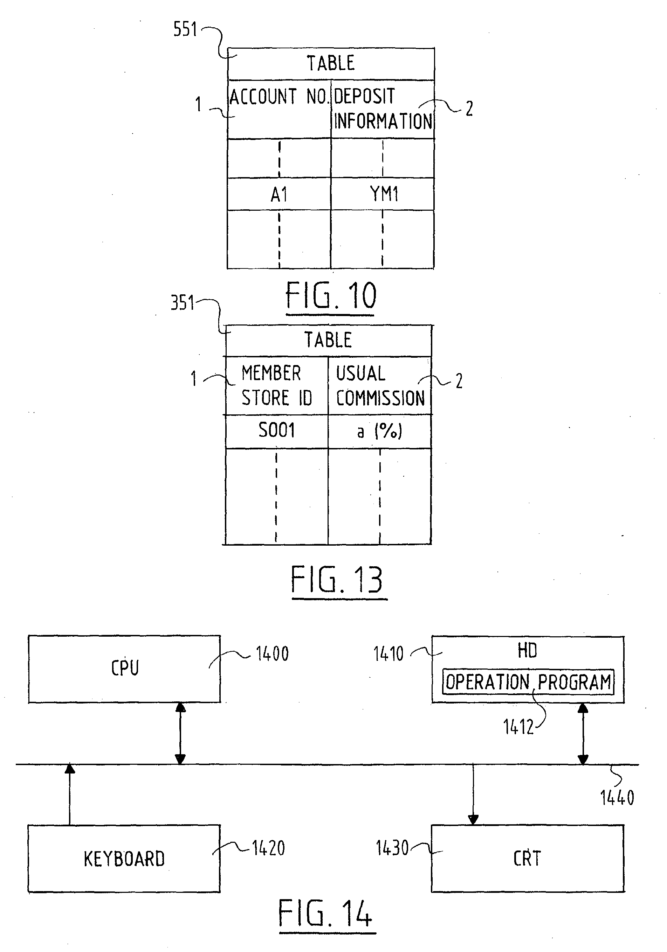

Fig. 13 is an explanatory figure of the table 351 stored in the table storage area 350. The table 351 is stored, with association, with a member store ID and a usual commission corresponding thereto. In the example of Fig. 13, registration is with a usual commission "a (%)" for the member store ID "S001". In this manner, a first commission is sought for each member store.

The processing section 310 is configured to request the settlement information center terminal unit 200 to send a group of pieces of information shown in Fig. 4 and receive the group of pieces of information from the settlement information center terminal unit 200, thereby carrying out advance payment as explained in the following.

### (Deposit Management Apparatus 500)

Fig. 9 is a configuration diagram of the deposit management apparatus 500. As shown in Fig. 9, the deposit management apparatus 500 is provided with a processing section 510 realized with a CPU or the like for operation according to an operation program, an input section 520 realized with an input device such as a keyboard, an output section 530 realized with a display device such as a CRT, and a storage section 540 realized with an HD or the like. The storage section 540 is stored with an operation program and formed with a table storage area 550 to store tables. The table stored in the table storage area 550 is to be referred, updated or so by the processing section 510.

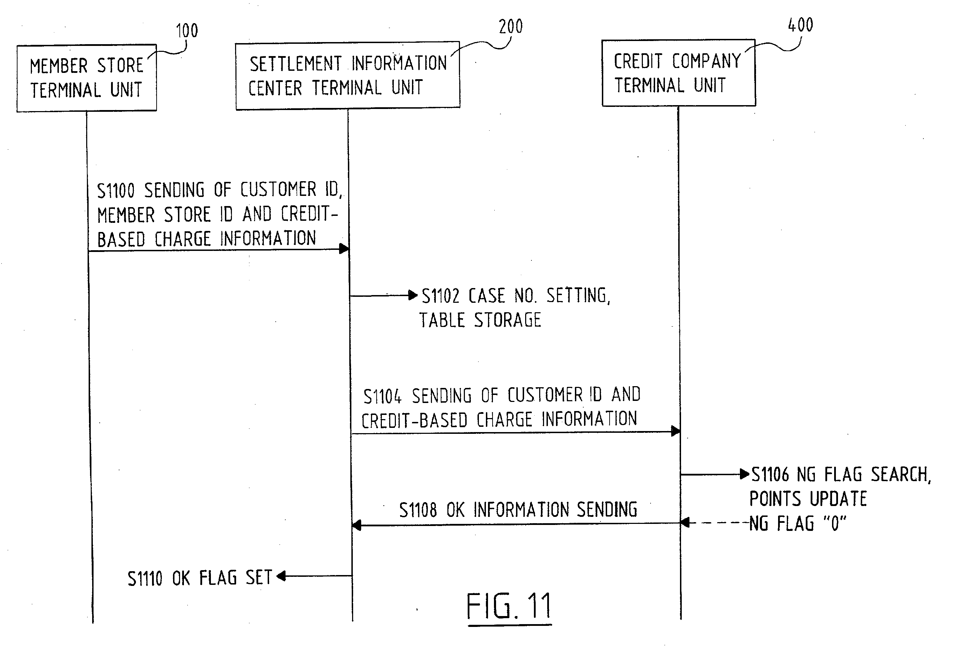

Fig. 10 is an explanatory figure of the table 551 stored in the table storage area 550. The table 551 can store, with association, an account number and deposit information representative of a deposit amount corresponding thereto. The example of Fig. 10 shows that deposit information is "YM1" corresponding to an account number "A1" of an account of the member store ID "S001" (see Table 252 in Fig. 5).

### (Operation)

Explanation is now made on the operation. At first, the former half operation is explained with reference to Fig. 11. It is assumed that the member store terminal unit 100 sends a customer ID "C001", a member store ID "S001" and credit-based charge information "M1" (step S1100), and the processing section 210 of the settlement information center terminal unit 200 receives them. Thereupon, the processing section 210 sets a case number "m001" unique to the case as shown in table 251 of Fig. 4, and stores the reception pieces of information (member store ID, customer ID and credit-based charge) to the respective areas. In this case, the reception date and time of the information is determined by detecting data-and-hour information from the timepiece 211, and stored to the area of reception date-and-hour (step S1102).

Then, the processing section 210 sends the customer ID "C001" and credit-based charge information "M1" to the credit company terminal unit 400 (step S1104). In response to this, the processing section 410 updates, in the table 451, the cumulative amount and points correspondingly to the received customer ID "C001", and further examines the corresponding NG flag (step S1106). In the example of Fig. 7, for the customer ID "C001", an NG flag "0" is sent as OK information (step S1108). Incidentally, although not shown, for the customer ID "C002", NG information is sent because the NG flag is "1".

The processing section 210, received OK information, sets "1" to the OK flag area of the table 251 of Fig. 4. On the other hand, the processing section 210, receiving NG information, sets "0" to the OK flag area of the table 251 of Fig. 4 (step S1110). In this manner, information is architected in the areas of the table 251.

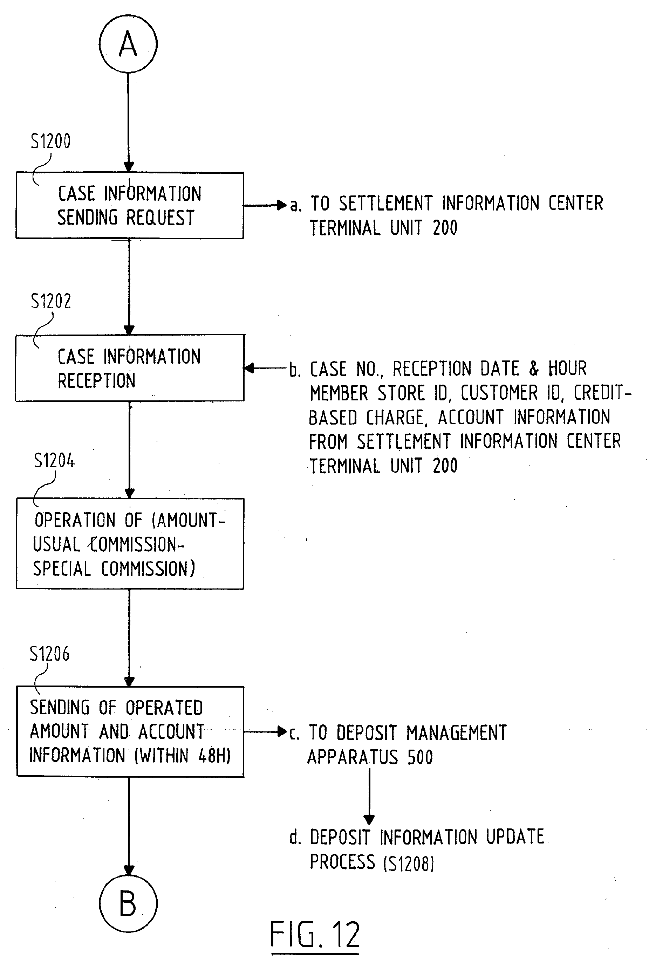

Explanation is now made on the operation of the central server 300, with reference to Fig. 12. At first, the processing section 310 requests, in proper timing, the settlement information center terminal unit 200 to send the case information architected in the table 251 (step S1200). Because the processing section 210 transmits a case number, reception date-and-time, member store ID, customer ID, credit-based charge information and account information corresponding to the member store ID (see Fig. 5) of only a case having an OK flag "1", the processing section 310 receives and stores them to a predetermined area of the storage section 340 (step S1202). For example, stored are a case number "m001", a reception date-and-hour "O (month), x (day), a (hour): b (minute)", a member store ID "S001", a customer ID "C001", credit-based charge information "M1" and account information "A1" corresponding to the member store ID.

Then, in step S1204, the processing section 310 subtracts, from the credit-based charge information M1, a first commission a(%) of M1 corresponding to the member store ID "S001" of the table 351, and further operates an amount subtracted by an advance-payment commission, e.g. of 2(%). The processing section 310, in step S1206, sends instruction information to the deposit management apparatus 500 so that it can transfer that amount to the account A1 within 48 hours (2 days) from the reception date-and-hour "O (month), x (day), a (hour): b (minute)".

In step S1208, the processing section 510 of the deposit management apparatus 500 updates the current balance of the account A1 of the table 551 as shown in Fig. 10 to increase it by an amount determined in the foregoing operation. Thus, advance payment against credit-based charge is realized for the member store in a brief term.

Consequently, according to the embodiment of the invention, the central server 300, in the case that the merchandise purchase acceptance/rejection information sent from the credit company terminal unit 400 in response to a sending request for the acceptance/rejection information as to whether the client of the client ID "C001" can purchase merchandise or not represents the customer can purchase merchandise by the utilization of credit, updates the deposit information about an account of the member store having the member store ID "S001" in a brief time, e.g. within a couple of days, in consideration of the amount represented by the credit-based charge information, thus making possible to make a payment to the member store in nearly a couple of days.

Meanwhile, the settlement information center terminal unit 300 cumulatively stores an information group associated an addition of a unique case number and information reception date-and-time information (reception date and hour) to an associated customer ID, credit-based charge information and member store ID, thus enabling centralized information management based on each case. Also, by previously registering, with association, a member store ID and account information representative of its account to the table 252, the settlement information center terminal unit 200 sends, to the central server 200, the account information corresponding to a member store ID determined by making reference to a registration content of the table 252 together with stored information group, in response to a case information sending request from the central server 300. Accordingly, it is possible to easily grasp account information.

Furthermore, the central server 200 updates the deposit information of an account A1 of a member store having a member store ID "S001" designated by account information in a predetermined time, i.e. within a couple of days from a time designated by the reception date-and-time information in the received information group by taking into consideration an amount represented by credit-based charge information, thus making it possible to realize swift advance payment. The central server 300 updates the deposit information such that the deposit amount increases by an amount of subtraction of first and second commissions from an amount represented by the credit-based charge information. Furthermore, because of registration in the table 351 for each first commission/member store ID, it is possible to easily determine an advance payment amount that a usual or advance-payment commission is taken into consideration.

Fig. 14 is a hardware configuration diagram of a principal part of the apparatuses shown in Fig. 1. The configuration shown in Fig. 14 has a CPU 1400, an HD 1410 as a recording medium recording an operation program 1412, a keyboard 1420 and a CRT 1430, wherein these are connected for mutual communication of required information through a bus 1440. The execution of the operation program 1412 by the CPU 1400 realizes various operations including those so far explained.

Although the embodiment of the invention was explained, various change or modification is possible for the embodiment of the invention within the scope not departing from the gist of the invention. Various modifications can be made including, for example, providing the apparatuses to a proper number, changing the content of each table properly, causing the other apparatus than the central server 300 to make an account transfer operation, and reception operation in another form.

As explained in the above, the present invention provides an effect that payment to a member store can be made in around a couple of days in performing a commercial transaction on credit.

## Claims

1. A method of paying a credit-based charge in advance comprising:
a step that a member store terminal unit reads a recording medium recording a customer identifier and sends information of credit-based charge to a customer thereof and information including a member store identification together with a read-out customer identifier;
a step that a settlement information center terminal unit requests a credit company terminal unit to send merchandise purchase acceptance/rejection information representative of whether or not the customer having the customer identifier is allowed to purchase merchandise by utilizing credit, in response to a reception of the pieces of information; and
a step that a central server updates deposit information about an account of the member store having the member store identifier in a short time period by taking into consideration an amount shown by the credit-based charge information in the case that merchandise purchase acceptance/rejection information sent in response to the request by the credit company terminal unit shows that the customer is allowed to purchase merchandise by utilizing credit.

2. A method of paying a credit-based charge in advance according to claim 1, wherein the settlement information center terminal unit cumulatively stores an information group associated with an addition of a unique case identifier and reception date-and-hour information of the information to an association of the customer identifier, the credit-based charge information and the member store identifier.

3. A method of paying a credit-based charge in advance according to claim 2, wherein the member store identification and account information representative of an account thereof are previously registered, with a correspondence, to registering means, the settlement information center terminal unit sending, to the central server, account information corresponding to the member store identifier determined by making reference to a registration content of the registering means together with the information group cumulatively stored, in response to a case information sending request from the central server.

4. A method of paying a credit-based charge in advance according to claim 3, wherein the central server updates the deposit information about an account of the member store having the member store identifier designated by the account information in a predetermined time from a time designated by the reception date-and-hour information in the received information group by taking into consideration an amount shown by the credit-based charge information.

5. A method of paying a credit-based charge in advance according to any of claims 1, 2, 3 and 4, wherein an update process of deposit information by the central server is to update the deposit information such that a deposit amount increases by an amount deducing first and second commissions from the amount represented by the credit-based charge information.

6. A method of paying a credit-based charge in advance according to claim 5, wherein the first commission is registered based on each member store identifier to second registering means.

7. A method of paying a credit-based charge in advance **characterized in that**:
in a case that merchandise purchase acceptance/rejection information sent by a credit company terminal unit in response to a sending request for merchandise purchase acceptance/rejection information of whether or not merchandise purchase is possible on credit by a customer shows that the customer can purchase merchandise by utilizing credit, a central server carries out an update process to update deposit information about an account of a member store by taking into consideration an amount shown by credit-based charge information sent from a member store terminal unit;
the update process being carried out within a couple of days from a time of sending request for the merchandise purchase acceptance/rejection information by taking into consideration two kinds of commissions.
